# EUROPEAN PATENT SPECIFICATION

(11) **EP 3 623 755 B1**
(45) Date of publication and mention of the grant of the patent: **07.06.2023**
(21) Application number: 17912824.4
(22) Date of filing: 21.11.2017
(51) Int. Cl.: G01B 3/04, G01B 3/56, G01C 9/28, G01C 9/34, G01C 15/12

(54) **RULER**
LINEAL
RÈGLE

(30) Priority: 07.06.2017 CN 201720657737 U
(43) Date of publication of application: 18.03.2020
(73) Proprietor: ZheJiang MGS Level Industry Co., Ltd, Jinhua Mountain Tourism Economic Zone, Jinhua Zhejiang 321000 (CN)
(72) Inventor: LI, Maicy, Guangzhou, Guangdong 510000 (CN)
(74) Representative: Sun, Yiming
(86) International application number: PCT/CN2017/112135
(87) International publication number: WO 2018/223621

(56) References cited:
- CN-U- 205 482 939
- CN-U- 206 223 068
- CN-Y- 2 767 960
- CN-Y- 201 242 431
- GB-A- 2 331 582
- US-A- 5 167 075
- US-A- 5 575 073
- US-A1- 2002 121 025

## Description

### TECHNICAL FIELD

The invention relates to a ruler, in particular to a ruler used as a measuring tool.

### BACKGROUND ART

A ruler is a measuring tool for detection and alignment of horizontality and verticality of an object, and the levelness of the object can be conveniently measured. However, the existing ruler can only provide measurement in a single direction and only has one function. If it is required to derive a corresponding vertical line/plane from the already located horizontal line/plane, one needs to perform measurement for a second time with the aid of other tools.

Patent document GB2331582A discloses a multi-angle spirit level having a body comprising a number geometric shaped sections, connected together by rotating locking joints. $

Patent document US 2002/121025A1 discloses a modular level having sockets connecting each level component, wherein magnetic means are used for securing the different sections together.

### SUMMARY OF THE INVENTION

In order to solve the above problems, the present invention provides a ruler which enables user to locate and measure a horizontal plane and a vertical plane at once, and the ruler can be applied as either a leveling instrument in industrial technical fields or a stationery ruler for students.

The present invention provides a ruler in accordance with the independent claim.

According to another preferred embodiment, when the first ruler body and the second ruler body are in leveled connection, the first surface and the third surface are in leveled connection and form an included angle of 180 degrees, and the second surface and the fourth surface are in leveled connection and form an included angle of 180 degrees; and when the first ruler body and the second ruler body are in perpendicular connection, the first surface and the fourth surface are in perpendicular connection and form an included angle of 90 degrees, and the second surface and the third surface are in perpendicular connection and form an included angle of 90 degrees.

According to the invention, the first ruler body comprises a first connecting surface intersecting with both the first surface and the second surface, the second ruler body comprises a second connecting surface intersecting with both the third surface and the fourth surface, and the first connecting surface and the second connecting surface are connected by attraction of magnets and each is capable of rotating with the other one as a reference surface; wherein the magnets are positioned at geometric center points of the first connecting surface and the second connecting surface, and the first connecting surface and the second connecting surface rotate about the geometric center points.

According to a preferred embodiment, the first connecting surface and the second surface form an included angle of 45 degrees, and the second connecting surface and the third surface form an included angle of 45 degrees.

According to a further development of this preferred embodiment, when the first ruler body and the second ruler body are in leveled or perpendicular connection, the first connecting surface overlaps the second connecting surface.

According to the invention, the first ruler body and the second ruler body are each provided with at least one bubble tube.

According to the invention, the needs for judging a horizontal plane of an object and providing a calibration reference are met, and a user can perform vertical location and measurement relative to the horizontal plane at the same time.

### BRIEF DESCRIPTION OF THE DRAWINGS

Fig. 1 is a schematic view showing a ruler in a leveled connection state according to the present invention; and
Fig. 2 is a schematic view showing a ruler in a perpendicular connection state according to the present invention.

### DETAILED DESCRIPTION OF THE INVENTION

Embodiments of the ruler of the present invention will be described in detail below with reference to the accompanying drawings, but the present invention is not limited to these embodiments.

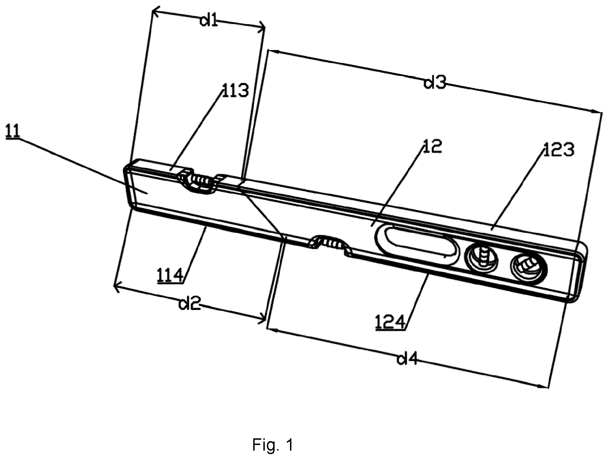

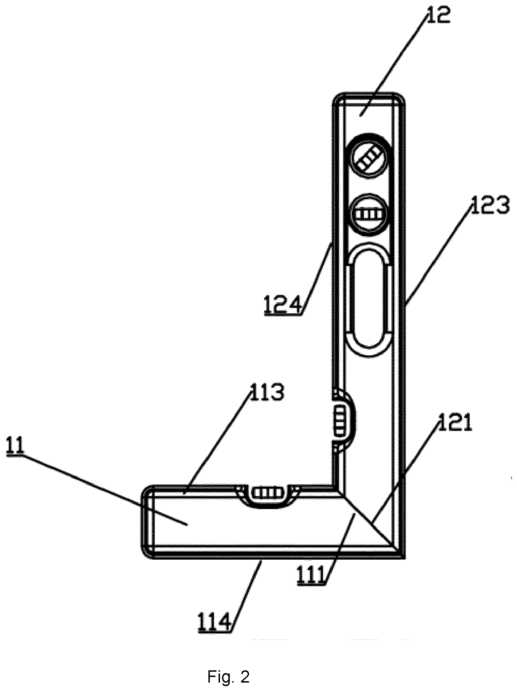

As shown in Figs. 1 and 2, the ruler of the present invention comprises a first ruler body 11 and a second ruler body 12, the first ruler body 11 comprises a first surface 113 and a second surface 114 which are parallel to each other, and the second ruler body 12 comprises a third surface 123 and a fourth surface 124 which are parallel to each other, wherein a long side of the first surface 113 has a length d1 smaller than or equal to a length d2 of a long side of the second surface 114, and a long side of the third surface 123 has a length d3 larger than or equal to a length d4 of a long side of the fourth surface 124. The first ruler body 11 and the second ruler body 12 are each provided with at least one bubble tube, wherein the bubble tube is internally provided with a bubble, and during measurement, it is indicated that the ruler is horizontal if the bubble is at the center of the bubble tube, otherwise, the ruler needs angular adjustment.

The first ruler body 11 and the second ruler body 12 are connected in a relatively rotatable manner so that the first ruler body 11 and the second ruler body 12 can switch between a leveled connection state and a perpendicular connection state. In the leveled connection state, the first ruler body 11 and the second ruler body 12 are assembled into a straight ruler. The first surface 113 of the first ruler body 11 and the third surface 123 of the second ruler body form an included angle of 180 degrees, the second surface 114 of the first ruler body 11 and the fourth surface 124 of the second ruler body form an included angle of 180 degrees; and in the perpendicular connection state, the first surface 113 of the first ruler body 11 and the fourth surface 124 of the second ruler body are in perpendicular connection and form an included angle of 90 degrees, and the second surface 114 of the first ruler body and the third surface 123 of the second ruler body are in perpendicular connection and form an included angle of 90 degrees.

Specifically, the first and second rule bodies 11 and 12 are connected through respective first and second connecting surfaces 111 and 121, the first connecting surface 111 intersects with the first and second surfaces, the second connecting surface 121 intersects with the third and fourth surfaces, and the first connecting surface 111 and the second connecting surface 121 are connected by attraction of magnets.

According to an example not falling under the scope of the claims, if the first connecting surface 111 and the second connecting surface 121 are connected by means of an assembly bolt, the assembly bolt is perpendicular to the first connecting surface 111 and the second connecting surface 121, and is positioned at a geometric center of the first connecting surface 111, or the assembly bolt may be positioned at a geometric center point of the second connecting surface 121, and the first connecting surface 111 and the second connecting surface 121 rotate with the assembly bolt as an axis. The assembly bolt may have a structure of a screw with a washer and a nut or a structure of a rivet with a washer, which is not particularly limited, as long as the connection between the first connecting surface and the second connecting surface can be achieved and each of the two connecting surfaces is allowed to rotate with the other one as a reference surface. Taking the structure of the screw and the nut as an example, for instance, the screw may be disposed on the first connecting surface, the nut may be disposed on the second connecting surface, and the washer may be added at a joint of the screw and the nut so that the screw and the nut can rotate relative to each other without separating from each other.

According to the invention, the first connecting surface and the second connecting surface are connected by means of magnets, wherein a preferably concave point (with a magnet button) is disposed at the geometric center of the first connecting surface, and a preferably convex point (with a magnet button) is disposed at the geometric center of the second connecting surface, so that it is ensured that the first connecting surface and the second connecting surface always rotate about the geometric centers of the connecting surfaces.

According to the present invention, both the first connecting surface 111 and the second connecting surface 121 are bevel surfaces having an angle of 45 degrees, namely, the first connecting surface 111 and the second surface 114 form an included angle of 45 degrees, and the second connecting surface 121 and the third surface 123 form an included angle of 45 degrees. In addition, an intersection line of the first connecting surface with the first surface is perpendicular to the long side of the first surface, and an intersection line of the first connecting surface with the second surface is also perpendicular to the long side of the second surface; similarly, intersection lines of the second connecting surface with the third surface and the fourth surface are perpendicular to the long side of the third surface and the long side of the fourth surface, respectively. Thus, as shown in Fig. 1, when the first ruler body 11 and the second ruler body 12 are in the leveled connection state, the first connecting surface completely overlaps the second connecting surface, and the first ruler body 11 and the second ruler body 12 are combined into a straight ruler; and as shown in Fig. 2, when the first ruler body 11 and the second ruler body 12 are in the perpendicular connection state, the first connecting surface completely overlaps the second connecting surface, and then the first ruler body 11 is perpendicular to the second ruler body 12.

The ruler provided the present invention can be used as either a leveling ruler for industrial measurement or a stationery ruler for students, the needs for judging a horizontal plane of an object and providing a calibration reference are met, and a user can perform vertical location and measurement relative to the horizontal plane at the same time.

The embodiments described in this specification are merely illustration of implementations of the inventive concepts, and the scope of the invention should not be construed as limited to the specific forms set forth in the embodiments.

## Claims

1. A ruler comprising a first ruler body (11) and a second ruler body (12),
wherein the first ruler body and the second ruler body are connected in a relatively rotatable manner to enable both leveled and perpendicular connections of the first ruler body and the second ruler body;
wherein the first ruler body and the second ruler body are each provided with at least one bubble tube;
wherein the first ruler body comprises a first surface (113) and a second surface (114) which are parallel to each other, and the second ruler body comprises a third surface (123) and a fourth surface (124) which are parallel to each other, wherein a long side of the first surface has a length (d1) smaller than or equal to that (d2) of a long side of the second surface, and a long side of the third surface has a length (d3) larger than or equal to that (d4) of a long side of the fourth surface, and
wherein the first ruler body comprises a first connecting surface (111) intersecting with both the first surface and the second surface, the second ruler body comprises a second connecting surface (121) intersecting with both the third surface and the fourth surface,
**characterized in that**
the first connecting surface and the second connecting surface are connected by attraction of magnets and each is capable of rotating with the other one as a reference surface, and
the magnets are positioned at geometric center points of the first connecting surface and the second connecting surface, and the first connecting surface and the second connecting surface rotate about the geometric center points.

2. The ruler of claim 1, **characterized in that**: when the first ruler body and the second ruler body are in leveled connection, the first surface and the third surface are in leveled connection and form an included angle of 180 degrees, and the second surface and the fourth surface are in leveled connection and form an included angle of 180 degrees; and when the first ruler body and the second ruler body are in perpendicular connection, the first surface and the fourth surface are in perpendicular connection and form an included angle of 90 degrees, and the second surface and the third surface are in perpendicular connection and form an included angle of 90 degrees.

3. The ruler of claim 1, **characterized in that**: the first connecting surface and the second surface form an included angle of 45 degrees, and the second connecting surface and the third surface form an included angle of 45 degrees.

4. The ruler of claim 3, **characterized in that**: when the first ruler body and the second ruler body are in leveled or perpendicular connection, the first connecting surface overlaps the second connecting surface.

## Patentansprüche

1. Lineal, umfassend einen ersten Linealkörper (11) und einen zweiten Linealkörper (12),
wobei der erste Linealkörper und der zweite Linealkörper in einer zueinander drehbaren Weise verbunden sind, um sowohl eine geradlinige als auch eine senkrechte Verbindung des ersten Linealkörpers und des zweiten Linealkörpers zu erlauben;
wobei der erste Linealkörper und der zweite Linealkörper jeweils mit wenigstens einer Libelle versehen sind;
wobei der erste Linealkörper eine erste Fläche (113) und eine zweite Fläche (114) umfasst, die parallel zueinander stehen, und der zweite Linealkörper eine dritte Fläche (123) und eine vierte Fläche (124) umfasst, die parallel zueinander stehen, wobei eine lange Seite der ersten Fläche eine Länge (d1) hat, die kleiner als oder gleich der Länge (d2) einer langen Seite der zweiten Fläche ist, und eine lange Seite der dritten Fläche eine Länge (d3) hat, die größer als oder gleich der Länge (d4) einer langen Seite der vierten Fläche ist, und
wobei der erste Linealkörper eine erste Verbindungsfläche (111) umfasst, die sowohl die erste Fläche als auch die zweite Fläche schneidet, und der zweite Linealkörper eine zweite Verbindungsfläche (121) umfasst, die sowohl die dritte Fläche als auch die vierte Fläche schneidet,
**dadurch gekennzeichnet, dass**
die erste Verbindungsfläche und die zweite Verbindungsfläche über die Anziehung von Magneten verbunden sind und jeweils in der Lage sind, mit der jeweils anderen als Bezugsfläche zu rotieren, und
die Magnete an den geometrischen Mittelpunkten der ersten Verbindungsfläche und der zweiten Verbindungsfläche positioniert sind, und die erste Verbindungsfläche und die zweite Verbindungsfläche um die geometrischen Mittelpunkte rotieren.

2. Lineal nach Anspruch 1, **dadurch gekennzeichnet, dass**, wenn der erste Linealkörper und der zweite Linealkörper in geradliniger Verbindung stehen, die erste Fläche und die dritte Fläche in geradliniger Verbindung stehen und einen eingeschlossenen Winkel von 180 Grad bilden, und die zweite Fläche und die vierte Fläche in geradliniger Verbindung stehen und einen eingeschlossenen Winkel von 180 Grad bilden; und wenn der erste Linealkörper und der zweite Linealkörper in senkrechter Verbindung stehen, die erste Fläche und die vierte Fläche in senkrechter Verbindung stehen und einen eingeschlossenen Winkel von 90 Grad bilden, und die zweite Fläche und die dritte Fläche in senkrechter Verbindung stehen und einen eingeschlossenen Winkel von 90 Grad bilden.

3. Lineal nach Anspruch 1, **dadurch gekennzeichnet, dass** die erste Verbindungsfläche und die zweite Fläche einen eingeschlossenen Winkel von 45 Grad bilden, und die zweite Verbindungsfläche und die dritte Fläche einen eingeschlossenen Winkel von 45 Grad bilden.

4. Lineal nach Anspruch 3, **dadurch gekennzeichnet, dass**, wenn der erste Linealkörper und der zweite Linealkörper in geradliniger oder senkrechter Verbindung stehen, die erste Verbindungsfläche die zweite Verbindungsfläche überlappt.

## Revendications

1. Règle comprenant un premier corps de règle (11) et un second corps de règle (12),
le premier corps de règle et le second corps de règle sont connectés de manière relativement rotative pour permettre des connexions à la fois au niveau et perpendiculaires du premier corps de règle et du second corps de règle ;
le premier corps de règle et le second corps de règle sont chacun pourvus d'au moins un tube à bulles ;
le premier corps de règle comprenant une première surface (113) et une deuxième surface (114) qui sont parallèles l'une à l'autre, et le second corps de règle comprenant une troisième surface (123) et une quatrième surface (124) qui sont parallèles l'une à l'autre, un côté long de la première surface ayant une longueur (d1) inférieure ou égale à celle (d2) d'un côté long de la seconde surface, et un côté long de la troisième surface ayant une longueur (d3) supérieure ou égale à celle (d4) d'un côté long de la quatrième surface, et
le premier corps de règle comprenant une première surface de connexion (111) coupant à la fois la première surface et la seconde surface, le second corps de règle comprenant une seconde surface de connexion (121) coupant à la fois la troisième surface et la quatrième surface,
**caractérisée en ce que**
la première surface de connexion et la seconde surface de connexion sont connectées par attraction d'aimants et que chacune est capable de tourner avec l'autre en tant que surface de référence, et
les aimants sont positionnés à des points centraux géométriques de la première surface de connexion et de la seconde surface de connexion, et que la première surface de connexion et la seconde surface de connexion tournent autour des points centraux géométriques.

2. Règle selon la revendication 1, **caractérisée en ce que** : lorsque le premier corps de règle et le second corps de règle sont en position à niveau, la première surface et la troisième surface sont en connexion à niveau et forment un angle inclus de 180 degrés, et la seconde surface et la quatrième surface sont en connexion à niveau et forment un angle inclus de 180 degrés ; et, lorsque le premier corps de règle et le second corps de règle sont en connexion perpendiculaire, la première surface et la quatrième surface sont en connexion perpendiculaire et forment un angle inclus de 90 degrés, et la deuxième surface et la troisième surface sont en connexion perpendiculaire et forment un angle inclus de 90 degrés.

3. Règle selon la revendication 1, **caractérisée en ce que** la première surface et la seconde surface forment un angle inclus de 45 degrés, et que la deuxième surface de connexion et la troisième surface forment un angle inclus de 45 degrés.

4. Règle selon la revendication 3, **caractérisée en ce que** : lorsque le premier corps de règle et le second corps de règle sont en connexion à niveau ou perpendiculaire, la première surface de connexion chevauche la seconde surface de connexion.
